**Europäisches Patentamt**

**European Patent Office**

**Office européen des brevets**

(19)

(11) Numéro de publication: **0 019 093**
**B1**

(12) **FASCICULE DE BREVET EUROPEEN**

(45) Date de publication du fascicule du brevet: **14.12.83**

(51) Int. Cl.³: **H 01 M 2/14, H 01 M 10/06**

(21) Numéro de dépôt: **80102073.6**

(22) Date de dépôt: **18.04.80**

(54) Accumulateur électrique au plomb à entretien limité.

(30) Priorité: **25.04.79 FR 7910462**

(43) Date de publication de la demande:
**26.11.80 Bulletin 80/24**

(45) Mention de la délivrance du brevet:
**14.12.83 Bulletin 83/50**

(84) Etats contractants désignés:
**AT BE CH DE FR GB IT LI LU NL SE**

(56) Documents cités:
FR - A - 2 217 813
FR - A - 2 266 318
FR - A - 2 281 651
FR - A - 2 287 782
FR - A - 2 290 048
GB - A - 1 230 577
GB - A - 1 415 976
NL - A - 7 800 079
US - A - 2 117 371
US - A - 2 978 529

(73) Titulaire: **COMPAGNIE EUROPEENNE D'ACCUMULATEURS Société anonyme dite:**
**16, rue de la Baume**
**F-75008 Paris (FR)**

(72) Inventeur: **Dalibard, Gérard**
**109, rue de Ville d'Avray**
**F-92310 Sevres (FR)**
Inventeur: **Pothet, Jean**
**19, rue Jean-François**
**F-78210 Saint-Cyr L'Ecole (FR)**

(74) Mandataire: **Weinmiller, Jürgen et al,**
**Zeppelinstrasse 63**
**D-8000 München 80 (DE)**

(56) Documents cités:
**REVIEW OF THE ELECTRICAL COMMUNICATION LABORATORY, vol. 19, no. 1-2, janvier-février 1971, pages 99-107 S. SADA et al.: "Investigation on Floating Voltage of Lead-Acid Storage Batteries"**
**DERWENT JAPANESE PATENTS REPORT, vol. 5, no. 5, publié le 19 mars 1971, no. 9071s**

Courier Press, Leamington Spa, England.

# 0 019 093

Accumulateur électrique au plomb à entretien limité

L'invention concerne un accumulateur électrique au plomb à entretien limité, destiné notamment aux batteries de démarrage, de traction, stationnaires ou semi-fixes, ainsi qu'aux batteries pour sous-marins. Un tel accumulateur est connu, par exemple à partir du document NL—A—7800079.

Dans le domaine des accumulateurs au plomb sans entretien, on a déjà proposé de petits accumulateurs, dits étanches, dont l'électrolyte en quantité limitée est pratiquement totalement retenu dans les pores de la matière active et des séparateurs. Ces accumulateurs comportent une soupape permettant un fonctionnement sous pression interne élevée augmentant la solubilité de l'oxygène dans l'électrolyte; ils ont une consommation d'eau négligeable, mais ne peuvent être utilisés dans les batteries dont les applications ont été énumérées plus haut. En particulier, le fait de limiter la quantité d'électrolyte utilisée entraîne une diminution des performances de l'accumulateur lors des décharges lentes ou rapides. De plus, un fonctionnement sous pression interne élevée pose des problèmes de sécurité et nécessite un renforcement notable des bacs des batteries, ce qui présente de gros inconvénients du point de vue encombrement et coût.

Pour obtenir un entretien réduit, il est donc apparu nécessaire de s'attacher à modifier certains composants des accumulateurs classiques, dont l'électrolyte n'est pas limité à la quantité retenue dans les pores des séparateurs et des matières actives, modifications n'entraînant pas de diminution des performances.

L'invention vise à perfectionner les accumulateurs tels qu'ils sont décrits dans le document cité ci-dessus, notamment en ce qui concerne la diffusion de l'oxygène vers les plaques négatives, ce qui favorise la recombinaison des gaz, la réduction du gazage et la diminution des pertes d'eau. Ce but est atteint par un accumulateur électrique au plomb à entretien limité comportant dans un boîtier un groupe formé de plaques positives et négatives et de séparateurs, plongé dans de l'électrolyte, un séparateur remplissant l'intervalle entre une plaque positive et une plaque négative, ce séparateur étant constitué d'un matériau microporeux en fibres non tissées, caractérisé en ce que le séparateur est constitué par une ou plusieurs couches, dont les fibres non tissées sont en un matériau choisi parmi le verre et les matières synthétiques, les pores de la ou des couches microporeuses ayant des diamètres compris entre 100 $\mu m$ et 600 $\mu m$.

Si l'épaisseur de ladite couche est par exemple de 0,4, de 0,6 ou de 0,8 mm, on utilisera autant de couches qu'il est nécessaire pour remplir l'intervalle entre deux plaques, cet intervalle variant avec le type d'accumulateur concerné.

Les séparateurs sont utilisés de préférence sous une pression de serrage comprise entre 0,05 kg/cm² et 0,30 kg/cm².

Selon un premier mode de réalisation, les fibres sont en verre, ont une longueur comprise entre 30 et 80 mm et un diamètre compris entre 15 et 20 microns; la couche de fibres présente une porosité de l'ordre de 85 à 95%.

Selon un deuxième mode de réalisation, les fibres sont en résine synthétique, en particulier en polyester, ont une longueur comprise entre 50 et 60 mm et un diamètre compris entre 18 et 20 microns; la couche de fibres a une porosité de l'ordre de 90 à 95%.

Les fibres de verre ou de polyester peuvent être liées par une résine synthétique.

Dans tous les cas, le diamètre des pores du séparateur choisi permet une bonne diffusion de l'oxygène vers les plaques négatives et donc une recombinaison plus aisée des gaz.

L'invention a également pour objet un accumulateur du type précité associé à son chargeur lui imposant un régime de "floating" à une tension comprise entre 2,18 volts et 2,14 volts.

D'autres caractéristiques et avantages de l'invention apparaîtront au cours de la description suivante d'exemples de modes de réalisation, donnés à titre non limitatif.

## Exemple I

On a réalisé trois accumulateurs de capacité 75 ampèreheures composés chacun d'un groupe formé de trois plaques positives (133 × 166 × 5,2 mm), de séparateurs et de quatre plaques négatives (133 × 166 × 4,2 mm). Les grilles des plaques sont en alliage de plomb contenant 6% d'antimoine (en poids).

— Accumulateur A de l'art antérieur:

chaque séparateur est constitué d'un élément nervuré du type PORVIC associé à une feuille de laine de verre,

— Accumulateur B selon l'invention:

chaque séparateur est formé de sept couches en fibres de verre, chaque couche ayant une épaisseur de 0,6 mm; le diamètre des fibres est compris entre 15 et 20 microns, leur longueur comprise entre 30 et 80 mm; la pression de serrage est 0,2 kg/cm²; le diamètre des pores se situe entre 210 et 360 microns. La porosité est de l'ordre de 90%.

— Accumulateur C selon l'invention:

chaque séparateur est formé de trois couches de fibres de polyester de 3,2 mm;

le diamètre des fibres est compris entre 18 et 20 microns, leur longueur comprise entre 50 et 60

**0 019 093**

mm; la pression de serrage est de l'ordre de 0,1 kg/cm²; le diamètre des pores se situe entre 160 et 580 microns. La porosité est de l'ordre de 90%.

Les trois accumulateurs précités ont été soumis à un régime de "floating" à 2,18 volts dans les cas suivants:

1. à 60°C pendant 226 jours
2. à 25°C pendant 400 jours

Le tableus 1 ci-dessous indique en pourcents les pertes d'eau mesurées dans les deux cas.

TABLEAU I

| Accumulateur | 60°C—226 Jours | 25°C—400 Jours |
|---|---|---|
| A | 100 % | 100 % |
| B | 61 % | 65 % |
| C | 50 % | 80 % |

L'utilisation des séparateurs selon l'invention apporte une diminution notable des pertes d'eau.

Example II

On a réalisé trois accumulateurs A', B', C', qui diffèrent respectivement de A, B, C, uniquement par le fait que l'alliage des grilles des plaques ne comporte que 2,5 % d'antimoine en poids. Le tableau II donne les résultats obtenus après des essais analogues à ceux de l'exemple I.

TABLEAU II

| Accumulateur | 60°C—226 Jours | 25°C—400 Jours |
|---|---|---|
| A' | 40 % | 77 % |
| B' | 36 % | 51 % |
| C' | 36 % | 54 % |

Le tableau II prouve qu'il est extrêmement intéressant de combiner l'utilisation des séparateurs selon l'invention avec des alliages pauvres en antimoine pour des grilles des plaques.

Après le régime de floating, on a soumis les accumulateurs selon l'invention à une décharge de contrôle en huit heures. Ils ont tous donné la même capacité. La mise en oeuvre des séparateurs selon l'invention n'a donc altéré en rien les performances des accumulateurs.

Exemple III

On a réalisé deux accumulateurs B" et C" identiques respectivement aux accumulateurs B' et C' et on les a soumis à un régime de "floating" à 2,15 volts et non à 2,18 volts. Le tableau III donne les résultats obtenus:

TABLEAU III

| Accumulateur | 60°C—226 Jours | 25°C—400 Jours |
|---|---|---|
| B" | 23 % | 32 % |
| C" | 20 % | 30 % |

On a vérifié que, malgré la tension de floating réduite, les accumulateurs B" et C" restaient chargés. Cette tension peut être comprise entre 2,18 volts et 2,14 volts.

3

**0 019 093**

Exemple IV

On a réalisé deux accumulateurs de capacité nominale Cn = 27Ah comportant chacun trois plaques positives (145 × 99 × 1,8 mm) et quatre plaques négatives de mêmes dimensions. L'intervalle (2,4 mm) entre un plaque positive et une plaque négative est rempli par un séparateur microporeux en fibres de verre.

— Accumulateur D:

le séparateur présente des pores fins dont le diamètre moyen est de l'ordre de 7 microns.

— Accumulateur E:

le séparateur présente des pores dont les diamètres sont compris entre 100 et 600 microns.

Le tableau IV que suit montre plus particulièrement l'intérêt de mettre en oeuvre des séparateurs à gros pores conformément à l'invention.

TABLEAU IV

| Tests | Accumulateur D | Accumulateur E |
|---|---|---|
| Rendement de recombinaison après surcharge de 1000Ah $$\text{à } I = \frac{Cn}{100} = 0,27A$$ | 42 % | 50 % |
| Résistance interne de l'accumulateur | 4,1 mΩ | 2,4 mΩ |
| Durée en décharge rapide à 135A à −18°C | 36 secondes | 118 secondes |
| Décharge lente à 1,35A à 25°C | 27Ah | 30Ah |

Les gains obtenus en matière de durée de décharge rapide, et de rendement de recombinaison sont particulièrement intéressants.

Remarquons que l'invention concerne tous les types de batteries contenant les accumulateurs définis précédemment.

**Revendications**

1. Accumulateur électrique au plomb à entretien limité comportant dans un boîtier un groupe formé de plaques positives et négatives et de séparateurs, plongé dans de l'électrolyte, un séparateur remplissant l'intervalle entre une plaque positive et une plaque négative, ce séparateur étant constitué d'un matériau microporeux en fibres non tissées, caractérisé en ce que le séparateur est constitué par une ou plusieurs couches dont les fibres non tissées sont en un matériau choisi parmi le verre et les matières synthétiques, les pores de la ou des couches microporeuses ayant des diamètres compris entre 100 $\mu$m et 600 $\mu$m.

2. Accumulateur au plomb selon la revendication 1, caractérisé par le fait que lesdites fibres sont en verre, ont une longueur comprise entre 30 et 80 mm et un diamètre compris entre 15 et 20 $\mu$m.

3. Accumulateur au plomb selon le revendication 1, caractérisé par le fait que lesdites fibres sont en polyester, ont une longueur comprise entre 50 et 60 mm et un diamètre compris entre 18 et 20 $\mu$m.

4. Accumulateur selon l'une des revendications précédentes, caractérisé par le fait que lesdites fibres sont liées par une résine synthétique.

5. Accumulateur selon l'une des revendications précédentes, caractérisé par le fait que ledit séparateur est soumis à une pression de serrage comprise entre 0,05 kg/cm² et 0,30 kg/cm².

6. Accumulateur selon l'une des revendications précédentes, caractérisé par le fait que lesdites plaques comportent des grilles en alliage de plomb dont la teneur en antimoine est inférieure à 3 %.

7. Accumulateur selon l'une des revendications précédentes, caractérisé par fait qu'il est associé à un chargeur lui imposant un régime de "floating" à une tension comprise entre 2,18 volts et 2,14 volts.

**Claims**

1. Electrical lead accumulator with limited maintenance, comprising in a casing a group formed of positive and negative plates and separators, immersed in the electrolyte, a separator filling the space between a positive and a negative plate, said separator being constituted of a microporous material of

4

unwoven fibres, characterized in that the separator is constituted by one or more layers, the unwoven fibres of which are of a material chosen from glass and the synthetic materials, the pores of the microporous layer(s) having diameters comprised between 100 $\mu$m and 600 $\mu$m.

2. A lead accumulator according to claim 1, characterized in that said fibres are of glass and have a length comprised between 30 and 80 mm and a diameter comprised between 15 and 20 $\mu$m.

3. A lead accumulator according to claim 1, characterized in that said fibres are made of polyester and have a length comprised between 50 and 60 mm and a diameter comprised between 18 and 20 $\mu$m.

4. An accumulator according to one of the preceding claims, characterized in that said fibres are linked by a synthetic resin.

5. An accumulator according to one of the preceding claims, characterized in that said separator is submitted to a compression comprised between 0,05 kg/cm² and 0,30 kg/cm².

6. An accumulator according to one of the preceding claims, characterized in that said plates comprise grids of a lead alloy, the contents in antimonium of which is less than 3%.

7. An accumulator according to one of the preceding claims, characterized in that it is associated to a charge device which submits the accumulator to a floating state at a voltage which is comprised between 2,18 and 2,14 Volts.

## Patentansprüche

1. Elektrischer Bleiakkumulator mit begrenzter Wartung, der in einem Gehäuse eine Gruppe bestehend aus positiven und negativen Platten und Separatoren aufweist, die in Elektrolyt getaucht sind, wobei ein Separator den Zwischenraum zwischen einer positiven und einer negativen Platte ausfüllt und aus einem mikroporösen Material aus nicht gewebten Fasern besteht, dadurch gekennzeichnet, daß der Separator aus einer oder mehreren Schichten besteht, deren nicht gewebte Fasern aus einem Material sind, das aus Glas und den synthetischen Materialien ausgewählt ist, wobei die Poren der mikroporösen Schichten) Durchmesser von Zwischen 100 $\mu$m und 600 $\mu$m haben.

2. Bleiakkumulator nach Anspruch 1, dadurch gekennzeichnet, daß die Fasern aus Glas sind, eine Länge von zwischen 30 und 80 mm und einen Durchmesser zwischen 15 und 20 $\mu$m haben.

3. Bleiakkumulator nach Anspruch 1, dadurch gekennzeichnet, daß die Fasern aus Polyester sind und eine Länge von zwischen 50 und 60 mm und einen Durchmesser von zwischen 18 und 20 $\mu$m haben.

4. Akkumulator nach einem der vorstehenden Ansprüche, dadurch gekennzeichnet, daß die Fasern durch ein Kunstharz miteinander verbunden sind.

5. Akkumulator nach einem der vorstehenden Ansprüche, dadurch gekennzeichnet, daß der Separator einem Preßdruck zwischen 0,05 kg/cm² und 0,30 kg/cm² unterworfen wird.

6. Akkumulator nach einem der vorstehenden Ansprüche, dadurch gekennzeichnet, daß die Platten Gitter aus einer Bleilegierung aufweisen, deren Gehalt an Antiomon geringer als 3% ist.

7. Akkumulator nach einem der vorstehenden Ansprüche, dadurch gekennzeichnet, daß er mit einem Ladegerät verbunden ist, das eine "Floating"-Betriebsweise bei einer Spannung bewirkt, die zwischen 2,18 und 2,14 Volt liegt.